# EUROPEAN PATENT SPECIFICATION

(11) **EP 4 358 702 B1**
(45) Date of publication and mention of the grant of the patent: **01.10.2025**
(21) Application number: 22738078.9
(22) Date of filing: 21.06.2022
(51) Int. Cl.: A01K 5/02, A01K 29/00, A01K 11/00, A01K 1/10

(54) **METHOD AND CONTROL DEVICE FOR CONTROLLING A FEED ROBOT AT A FEED TABLE**
VERFAHREN UND STEUERUNGSVORRICHTUNG ZUR STEUERUNG EINES FÜTTERUNGSROBOTERS AN EINEM FUTTERTISCH
PROCÉDÉ ET DISPOSITIF DE COMMANDE D'UN ROBOT D'ALIMENTATION À UNE TABLE D'ALIMENTATION

(30) Priority: 23.06.2021 SE 2150813
(43) Date of publication of application: 01.05.2024
(73) Proprietor: DeLaval Holding AB, 147 21 Tumba (SE)
(72) Inventor: KLAAS, Ilka, 147 21 Tumba (SE)
(74) Representative: DeLaval International AB
(86) International application number: PCT/SE2022/050613
(87) International publication number: WO 2022/271068

(56) References cited:
- EP-A1- 2 648 503
- EP-A1- 3 494 779
- WO-A2-2015/122763

## Description

### Technical field

The present disclosure generally relates to feeding animals and in particular to a method for operating a feed robot at a feed table in a livestock area. The disclosure also relates to a control device for performing the method.

### Background

Feeding dairy animals, or other livestock, is an important daily routine for farmers which takes a lot of time when performed manually. The animals receive, for example, roughage or totally or partially mixed rations at a feed table or feed fence. In order to save time and effort for the farmer, feed robots may be used to take care of different tasks of the feeding routine. For example, feed robots may be programmed to autonomously deliver feed at a feed table or to redistribute feed at the feed table, for example by pushing.

To increase feed intake and thus milk production, the feed table should ideally never be empty and attract animals to eat 24 hours a day. However, often certain feeding places at a feed table are more attractive to the animals than others, and uneven occupancy at the feed table can lead to displacement of weaker animals.

As of today the timing of bringing out new feed does often not consider the true amount of feed left at the feed table and at specific feeding places. To avoid too many leftovers, farmers may also leave the feed table basically empty for a couple of hours, which reduces feed intake and thus milk production.

In addition, feed that is pushed away from the feed fence by the animals while eating has to be pushed back to be within reach of the animals. It might be difficult to determine how often such a feed pusher robot shall operate. If pushing feed is not performed frequently enough feed intake will be reduced and consequently also milk production. On the other hand, pushing feed too often is not energy efficient and might also disturb the animals.

To overcome these problems systems have been proposed where feed (or rest feed) on a feed table is measured using sensors, see for example EP3062611B1 and EP2806733B1. However, these systems require that additional sensors (e.g. height and feed sensors) are installed in the livestock area and/or on the feed robot. Hence, there is a need for improved feed management systems using robots that overcome the above-mentioned disadvantages. A system for monitoring other entities and objects in an animal space is disclosed in WO 2015/122763 A2. EP3494779 A1 discloses a livestock feeding system for determining a roughage intake of individual livestock animals in an animal shed environment.

### Summary

It is an object of the disclosure to alleviate at least some of the drawbacks with the prior art. Thus, it is an object to provide a method for operating a feed robot in a more optimised way. The invention is set out in the appended claims.

According to a first aspect, the disclosure relates to a method for operating a feed robot at a feed table in a livestock area. The method comprises monitoring over a time period subsequent to distributing feed at the feed table, animal data acquired by a real-time location system, using tags carried by animals in the livestock area and indicative of respective positions of the animals in the livestock area in relation to a feed table. The method further comprises determining, based on the animal data indicative of respective positions of the animals in relation to the feed table, eating statuses of a plurality of individual animals in the livestock area and controlling operation of the autonomous feed robot based on the determined eating statuses of the plurality of individual animals. It has been realized that the eating status may be determined using the animal data indicative of respective positions of the animals in the livestock area in relation to a feed table. By controlling operation of a feed robot based on animal's actual eating behaviour the feed robot may be operated in a manner that is optimised based on needs. In this way feed intake may be enhanced, while avoiding too many leftovers.

The controlling operation comprises triggering the feed robot to start and/or stop operating and/or configuring an operation schedule of the feed robot. Hence, the feed robot may be triggered to start operating when needed and to stop operating when it is not needed.

Additionally or alternatively, the controlling operation comprises adjusting a trajectory, speed and/or operation mode of the feed robot. Hence, the feed robot may be controlled to operate at places where it is needed and in a way that is needed. For example, the feed robot may drive to a certain place and deliver feed if the eating statuses indicate that there is no feed at a certain place.

The determining eating statuses comprises determining whether the individual animals are eating or not eating. By controlling the feed robot based on amount of eating activity it may be assured that feed is always available while avoiding too many leftovers.

Alternatively or additionally, the determining eating statuses comprises determining whether the individual animals are able to reach feed table or are not able to reach the feed table. Thereby, the feed robot may be controlled based on e.g. a count of queuing animals, that are unable to reach the feed table.

Alternatively or additionally, the determining eating statuses comprises determining whether the individual animals are in a feeding zone or outside the feeding zone, wherein the feeding zone is a predefined area in which an animal that is eating or is attempting to eat is expected to reside. Thereby, the feed robot may be controlled based on an estimation of how many animals want to eat.

In some embodiments, the monitored animal data is further indicative of respective poses and/or activities of the animals and determining eating statuses further based on respective poses and/or activities of the individual animals. Thereby, eating status may be determined with better reliability.

In some embodiments, the determining eating statuses comprises determining that animals are eating based on the animal data indicating that their respective poses and/or activities are associated with eating. In some embodiments, the determining eating statuses comprises determining that animals are not eating based on the animal data indicating that their respective poses and/or activities are disassociated with eating. Thereby, determination of whether or not animals eat can be determined with better reliability.

In some embodiments, the activities indicated by the animal data comprise head movement associated with eating, and/or chewing activity associated with eating, stationarity, walking activity, restless behaviour and/or movement towards feed table. These are example activities that can be used to determine whether animals are eating or not.

In some embodiments, the determining eating statuses comprises determining that animals are eating or not eating based on their respective distances to the feed table indicated by the animal data. Thereby, determination of whether or not animals eat can be determined with better reliability.

In some embodiments, the determining eating statuses comprises determining whether the animals are able to reach feed or unable to reach the feed, based on the respective positions of the animals. In some embodiments, the determining eating statuses comprises determining whether the animals are inside or outside the feeding zone, based on the respective positions of the animals. These eating conditions may be useful to control operation of the feed robot.

In some embodiments, the method comprises identifying time patterns of the determined eating statuses, wherein the controlling operation is based on the identified time patterns. Hence, changes in eating statuses over time may be analysed and used as a basis for controlling the feed robot.

In some embodiments, the identifying comprises determining popular time periods during which more than a certain number of animals have eating status in feeding zone and controlling the operation based on the determined popular time periods. In this way operation of the feed robot may be adjusted to match increased demand at popular times.

In some embodiments, the identifying comprises determining idle time periods during which less than a certain number of animals have eating status in feeding zone and controlling the operation based on the determined idle time periods. In this way operation of the feed robot may be adjusted to match decreased demand at idle times.

In some embodiments, the method comprises determining based on the determined eating statuses, a status at or around the feed table, and controlling the operation of the feed robot based on the determined status at the feed table. In this way operation of the feed robot may be adjusted to match the status at the feed table, such as amount of feed available or animal occupancy.

In some embodiments, the controlling operation comprises controlling operation in individual parts or zones of the livestock area, based on eating statuses of animals present in the respective individual parts or zones. In this way operation of the feed robot may be adjusted to match different needs at different parts of the feed table. In some embodiments, the method comprises determining, based on the eating statuses, a conflict situation not solvable by the feed robot and providing an alert to a user in response to detecting the conflict situation. Hence, a farmer may be made aware by a problem that is not solvable by the feed robot.

In some embodiments, the conflict situation comprises that a time average of a count of animals that are "able to reach feed" and "not eating" falling below a threshold value. In some embodiments, the conflict situation comprises that a time average of a count of animals that are "eating", exceeds or falls below, a threshold value. In some embodiments, the conflict situation comprises that a distribution of animals positioned at different parts of the feed table deviating from an expected distribution with more than a certain amount. Hence, a variety of conflict situations may require manual intervention by a farmer.

In some embodiments, controlling operation comprises initiating feed distribution and/or feed pushing upon a count of animals having eating status not eating and able to reach feed table exceeding a predetermined threshold during a certain time period. Hence, the feed robot may be triggered to operate if there are many animals close to the table that do not eat as this typically indicate that there is a need for feed pushing or feed delivery.

In some embodiments, controlling operation comprises initiating feed distribution and/or feed pushing upon a count of animals having eating status in feeding zone and not eating, exceeding a predetermined threshold during a certain time period. Hence, the feed robot may be triggered to operate if there are many animals close to the table that do not eat as this typically indicate that are many animals that want to eat at the same time and that there is a need for feed pushing or feed delivery. In some embodiments, controlling operation comprises initiating feed distribution and/or feed pushing upon a count of animals that having status in feeding zone and unable to reach feed table exceeding a predetermined threshold during a certain time period. Hence, the feed robot may be triggered to operate if there are many animals close to the table that do not eat as this typically indicate that there are animals queuing at certain places and that there is maybe only feed at some parts of the feed table. Hence, there is a need for feed pushing or feed delivery. According to a second aspect, the disclosure relates to a control device for operating a feed robot at a feed table in a livestock area, wherein the control device is configured to perform the method according to the first aspect.

### Brief description of the drawings

Fig. 1 illustrates a feed robot according to some example embodiments.
Fig. 2 illustrates a feed robot 1 operating along a feed table 31.
Fig. 3 is a top view of an example livestock area comprising a feed table.
Fig. 4A illustrates a state machine for transition between the eating statuses.
Fig. 4B illustrates how different eating statuses that can be assigned to an animal relate to each other.
Fig. 5 is a flowchart of the proposed method for operating a feed robot.
Fig. 6 illustrates a control device according to the second aspect.
Fig. 7 is a conceptual illustration of a real time location system.

### Detailed description

The proposed technique is based on the insight that by analysing animal data acquired used tags carried by a plurality of individual animals, it is possible to gain insight about the animals eating behaviour. The animal data may for example provide information about where in a livestock area animals are positioned and if their behaviour indicate that they are eating. By investigating how many animals are visiting and/or have visited the feed table, and possibly also whether their activities at the feed table were associated with eating (for example bending head down to pick up feed and chewing), it is possible to estimate a status (such as how much feed is left or disturbances) at the feed table. Feed delivery and feed pushing can then be initiated based on the estimated status at the feed table. Animal behaviour may be analysed to analyse a situation around the feed table. For example queueing or abnormal behaviour that may affect feed intake may be detected. The situation around the feed table may also be taken into account when controlling the feed robot. In this way it is possible to enhance feed intake for all animals.

From the animal data acquired using tags, it is typically possible to determine individual positions of the animal at the feed table. Hence, by monitoring animal data it is possible to conclude if a certain feeding place (for example one headlock) is occupied or not. Hence, an occupancy over time at individual places of the feed table may also be determined. Consequently it is also possible to determine how much feed is left at each feeding place at the feed table and adjust feed delivery and feed pushing accordingly.

In summary this disclosure proposes using data acquired using tags carried by the animals to control an automatic feed robot to manage the feed table in order to achieve that feed is available to the animals at the feeding places when the animals need it. More specifically, the proposed technique comprises determining eating statuses of the animals, based on animal data acquired using tags carried by animals in the livestock area and controlling one or more feed robots based on the determined eating statuses.

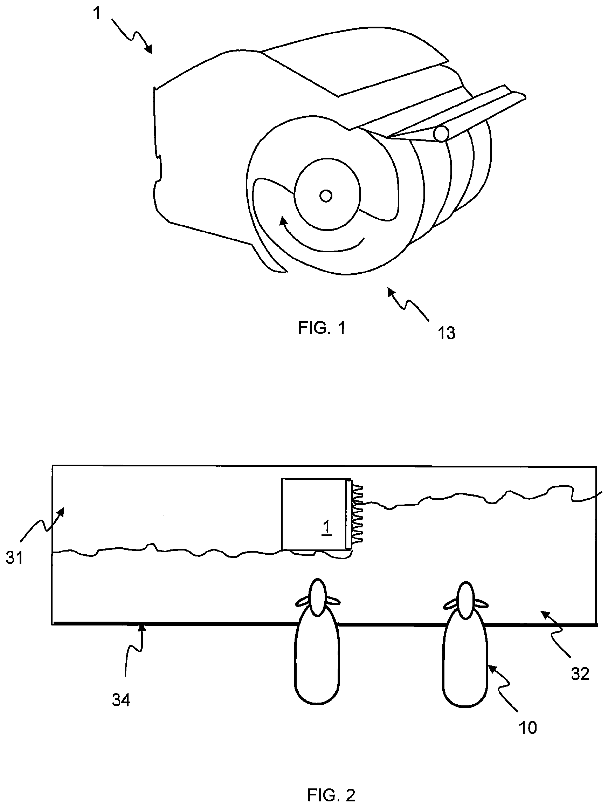

Below, exemplifying embodiments of an autonomous feed robot, herein referred to as feed robot, and a method for operating a feed robot will be described with reference to Figs. 1-7. The embodiments are intended to be performed by a control device, which is associated with a feed robot comprising a feed distribution mechanism configured to deliver and/or redistribute feed at a feed table in a livestock area. The term "associated with" is here intended to cover at least that the control device is operatively connected to the feed robot and that the control device can control the feed robot. The feed robot is suitable for operation in a barn in which dairy animals are kept, such as e.g. cow, buffalo, sheep or goat.

Fig. 1 illustrates a feed robot 1. The feed robot 1 comprises a feed distribution mechanism 13 configured to deliver and/or redistribute feed in a livestock area. In the illustrated example the feed distribution mechanism 13 is a feed redistribution mechanism configured to redistribute or move feed. The illustrated feed redistribution mechanism comprises a rotating auger. The rotating auger lifts, mixes, and aerates the feed while repositioning feed closer to a feed fence. However, other possible implementations of the feed redistribution mechanism may comprise a barrel, a skirt, a plough or some other kind of feed redistribution mechanism.

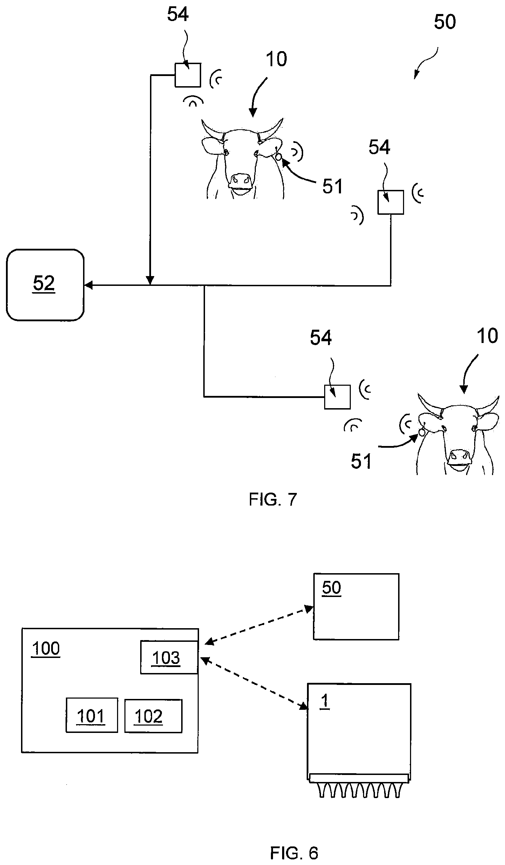

The feed distribution mechanism 13 may alternatively, or in addition, comprise a feed delivery mechanism configured to deliver feed at a feed table. The illustrated feed robot 1 can be controlled to navigate and move freely, in at least two physical dimensions, i.e. it is not bound to a fixed track. The feed robot may be tracked by a positioning system, such as the RTLS used to position the animals 10, see Fig. 6. Hence, the feed robot 1 is configured to move around autonomously in livestock buildings or generally in a farm area. In particular the feed robot 1 is configured to move at, along and around a feed table in a livestock area. In alternative embodiments, the feed robot is running along a track, i.e. not freely.

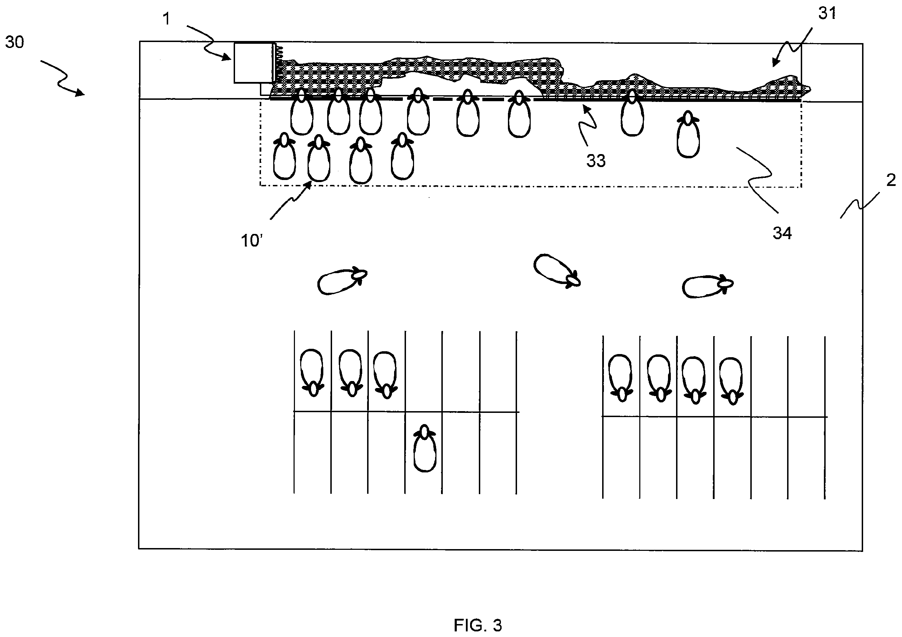

Fig. 2 illustrates a feed robot 1 operating along a feed table 31. A feed table 31 herein refers to any surface where feed is disposed. A feed table may be a separate arrangement or may be a part of the floor. In other words, a feed table 31, is an area where feed is distributed to be eaten by the animals. The separate feed table parts are typically arranged along one or more alleys in a livestock area, such as a barn. The feed table may comprise several (separate or connected) feed table parts, which may be seen as individual feed tables 31. However, in this disclosure these individual feed tables 31 are referred to as one single feed table, as the feed table 31 is typically just a part of the floor, on which it is intended to put feed. For simplicity only one feed table part is illustrated in Fig. 2 and 3.

A feed fence 33 is arranged along the alley between the feed table 31 and the animals. The feed fence 33 is arranged to separate the feed table 31 from a dwelling area 2 (Fig. 3). More specifically, the feed fence 33 is a barrier preventing the animals 10 from entering the feed table 31, but through which the animals can reach feed 32 positioned near the feed fence 33 by reaching their heads through the feed fence 33. Thus, the feed fence defines several feeding positions where animals may access the feed on the feed table in parallel. Head locks arranged in the feed fence 33 are commonly used to fix the position of one animal 10 to one feeding place.

Fig. 2 illustrates how feed 32 is formed into a narrower pile through pushing by the feed distribution mechanism 13. In this example, this is achieved by rotation (as indicated by the arrow in Fig. 1) of the auger of the feed distribution mechanism 13. The rotating auger repositions feed closer to the feed fence 33, and thereby closer to the animals 10. By repositioning the feed 32 closer to the animals 10 and covering empty spots on the feed table 31 with feed, feed 32 is accessible at all available feeding places at the feed table 31. This reduces competition between animals 10 at the feed table 31 and misplacement of the animals. It also ensures that lower ranked animals get access to feed.

Fig. 3 illustrates a feed table 31 arranged in a livestock area 30. The livestock area 30 comprises a dwelling area 2 in which the animals 10 are free to roam, cubicles 4, and a feed robot 1. A feed fence 33 separates the feed table 31 from the dwelling area 2. The feed table 31 is typically divided into feeding places.

When an animal intends to eat it moves towards the feed table 31. It may be assumed that most animals that reside in a feeding zone 34 close to the feed table 31, for example in the alley right next to the feed table 31, are there because they are eating, have just eaten or intend to eat. Stated differently, the feeding zone 34 is defined as a predefined area of the livestock area, close to the feed fence 31. In other words, a predefined area in which an animal that is eating or is attempting to eat is expected to reside is herein referred to as a feeding zone 34. The feeding zone 34 may be defined differently depending the livestock area 30 and the feed table 31. Hence, the feeding zone 34 is typically predefined based on the design of the barn and observations about eating behaviour. For example, the feeding zone 34 is an area within a predetermined distance (e.g. 3, 4 or 5 meters) from the feed fence on the side of the feed fence 34 where the animals 10 are able access the feed 32.

The animals 10 in the livestock area 30 are carrying tags 51 (Fig. 7). Animal data indicative of positions of the animals 10 in the livestock area 30 in relation to a feed table is acquired using the tags. In some embodiments the tags are configured to acquire activity data. For example, the tags may comprise an accelerometer. If the tags are positioned on the animal's heads, ears or necks, they may be used to determine head movement and eating activity such as chewing. Different techniques to determine eating behaviours of individual animals from accelerometer data are known in the field of farming. One example is described in "Development of an automatic classification system for eating, ruminating and resting behavior of cattle using an accelerometer", Grassland Science (ISSN1744-6961), Volume 54 Issue 4 pages 231 - 237, December 2008.

In some embodiments, the animal data is indicative of activity of the animals, such as activities associated with eating. For example, the animal data is indicative of chewing activity associated with eating, animal pose etc. Note that chewing activity associated with eating shall be differentiated from chewing associated with ruminating, for example by analysing chewing pattern or in addition studying the pose or movement of the animal or whether the animal is opening its mouth.

The animal data is provided by a Real Time Location System, RTLS. installed in the livestock area. An RTLS 50 is a known type of system used to track the location of objects, such as animals 10, in real time using tags 51 attached to animals 10 located in a livestock area 300 as the one in Fig. 1. Hence, if an RTLS 50 is already available the proposed technique can use animal data provided by the already installed RTLS 50. An RTLS 50 will be described in further detail below in connection with Figs. 6 and 7.

In alternative embodiments not forming part of the claimed invention, the tags 51 are in direct communication with one or more of a plurality of tag readers (not illustrated) arranged in the livestock area 30. In these embodiments, the tags 51 may be configured to record animal data including activity data. In some embodiments the positions of the animals 10 are determined based on relative distance to one or more of the tag readers. For example, the position is determined based on ability to communicate wirelessly with one or more of the access point using near field communication. The animal data is then communicated from the tags 51 to one or more of the tag readers.

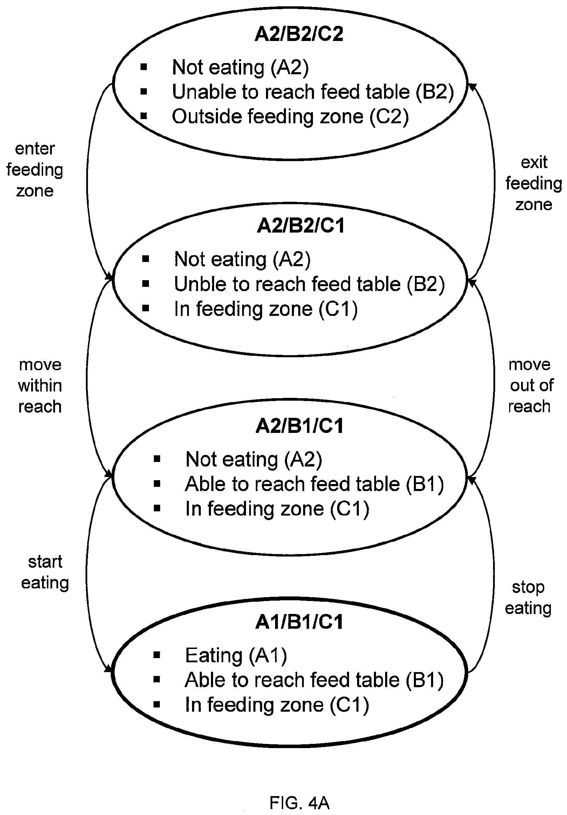

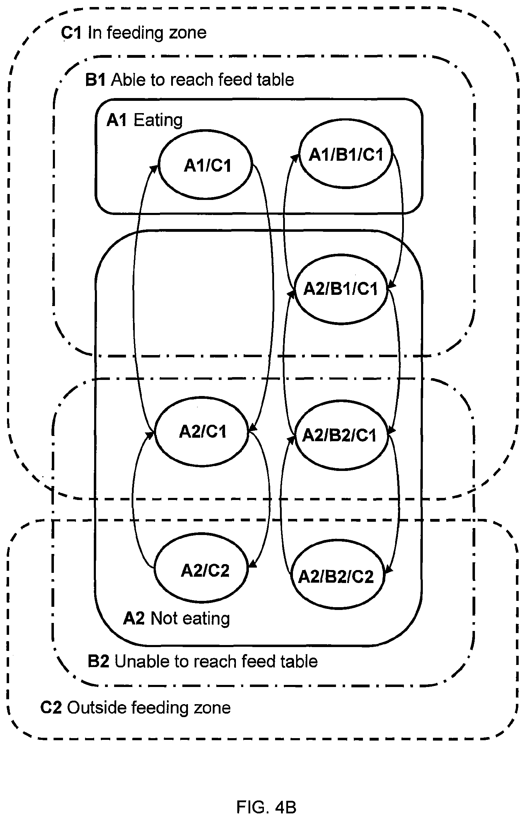

The proposed technique is based on using information about eating behaviour, which information herein is referred to as eating status, to control a feed robot. Eating status of an animal herein refers to an animal's state with regards to eating. The status may be represented by one or more parameters or conditions describing the animal's status associated with eating. For better understanding of the proposed technique some example eating statuses and their mutual relations will be described with reference to Fig. 4A and Fig. 4B.

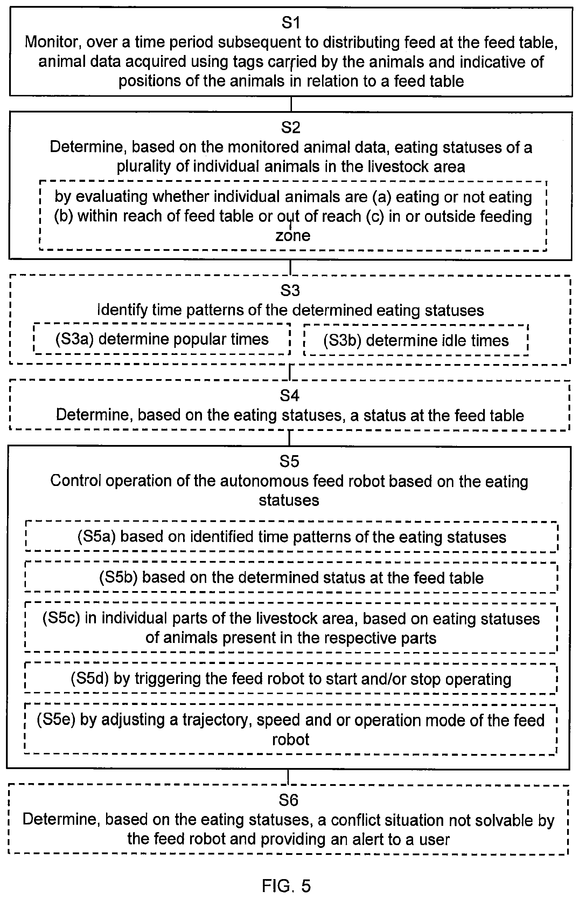

Fig. 4A illustrates a state machine for transition between different eating statuses. In the example of 4A each state is represented by three conditions that are evaluated or analysed based on animal data provided by the tags 51 (Fig. 5). More specifically a first condition is whether the animal is eating A1 or not eating A2. A second condition B is whether the animal can reach the feed table B1 (e.g. if it can be assumed or determined that its head is reaching through the feed fence and/or is in a headlock) or not, B2. A third condition C is whether the animal is within the feeding zone C1 or outside the feeding zone C2. At every point in time the animal's status may be described by a combination of these three conditions. However, there are only a few combinations that are likely. Some combinations are even impossible.

This will be described with an example. If an animal is resting in its box 4, it will have the condition not eating A2. Any chewing activity indicated by the animal data can then be ignored and might for example be associated with rumination. Furthermore, the animal's position is far from the feed table 31. Thus, the animal will have conditions unable to reach feed table B2 and even outside feeding zone C2. This status is herein referred to as A2/B2/C2.

When the animal wants to eat it will typically walk towards the feed table. If real-time positioning is used, the animal's movement may be tracked continuously to detect status changes. When the animal enters the feeding zone 34 the second condition defining the eating status changes to inside feeding zone C1, while the others remain the same as the animal is still out of reach of the feed table 31 and has not started to eat. This status is herein referred to as A2/B2/C1.

When the animal is close enough to reach the feed the condition unable to reach feed table B2 changes to able to reach feed table B1. As noted before this may indicate that it is reaching through the feed fence with its head. The status is now A2/B1/C1. When the animal starts eating the status changes again and the status will become A1/B1/C1, which is the only status in which the animal is actually eating. This status change can be detected for example by detecting, based on the animal data, that the animal performs a movement that corresponds to that it bends down its head and picks up feed and starts chewing.

When the animal stops eating this may be detected in a similar way and the status changes back to A2/B1/C1. When the animal leaves the feed table 31 the eating status changes again, first to A2/B2/C1 when the animal moves away from the feed table and then again when the animal leaves the feeding zone 34. At this time status is back to A2/B2/C2.

When a plurality of animals is dwelling in a livestock area 30 like the one illustrated in Fig. 3, their combined eating statuses, in particular over time, will affect the amount of feed at the feed table 31. The animals eating behaviour may also affect the distribution of feed at the feed table as feed tends to be spread out and eventually moved out of reach of the animals when they eat. There is also a reverse effect that the amount and distribution of feed will influence the animals eating behaviour. For example, if one part of the feed table 31 is empty, or if the feed is out of reach, then animals may avoid this part. Hence, there is a variety of ways to utilise information about the animals eating statuses in order to know whether interaction by a feed robot 1 is required as will be further described below.

Fig. 4B illustrates how the different conditions described in connection with Fig. 4A relate to each other, and to the state machine described in Fig. 4A (to the right). In the example of Fig. 4A, eating statuses are determined by analysing three different conditions. However, in other embodiments only one or two of the conditions may be used. Also other conditions associated with eating may be analysed to determine eating status. In Fig. 4B an alternative state machine is also illustrated (to the left) which is based on only two states. Fig. 4B further illustrates that some conditions cannot be combined. For example, an animal that it outside the feeding zone C2 cannot at the same time be able to reach the feed table B1.

It must be appreciated that the conditions described in Fig. 4A and Fig. 4B are just examples illustrating how eating statuses may be determined based on animal data acquired using tags. It must be appreciated that various condition and statuses are possible depending on implementation and need.

The proposed technique will now be described in further detail with reference to the flow chart of Fig. 5, the livestock area of Figs. 3 and the eating statuses of Fig. 4A and 4B.

Fig. 5 is a flow chart of an exemplifying method for operating a feed robot 1 at a feed table 31 in a livestock area 30. The method of Fig. 5 is e.g. performed by control device 100. The control device 100 is typically, at least partly, implemented in a control device remote from the feed robot 1, for example in control device of a livestock management system.

The method may be implemented as a computer program comprising instructions which, when the program is executed by a computer (e.g. a processor in the control device), cause the computer to carry out the method. According to some embodiments the computer program is stored in a computer-readable medium (e.g. a memory or a compact disc) that comprises instructions which, when executed by a computer, cause the computer to carry out the method.

The feed robot 1 is operated according to an operation plan that comprises a schedule and a trajectory. The trajectory defines a route which defines where the feed robot 1 should drive and a corresponding velocity i.e. speed and travel direction. The schedule defines when the feed robot 1 should start operating along the trajectory. In some embodiments, the operation plan defines timings for sessions of the feed robot 1. More specifically a session herein refers to one operation session, which typically comprises one round, or run, in the livestock area. When the feed robot 1 is not operating, i.e. between the operating sessions, it is typically charged in a docking station.

The proposed method may be used with different types of feed robots. The method will herein be described with reference to the feed robot 1 of Fig. 1-3, comprising an auger. However, the method may be used with any feed robot 1 configured to deliver new feed and/or to redistribute feed that is already present on the feed table.

The first time the feed robot 1 is put into use in a livestock area 30 it has to be programmed with an initial operation plan. Such an operation plan typically comprises a schedule and a trajectory. In some embodiments the schedule is preprogrammed by the manufacturer. Alternatively, a user has to configure the schedule. However, an initial route comprising one or several possible segments typically needs to be programmed at installation in order to start using the feed robot 1 to distribute feed 32. With the proposed method this initial operation plan may be adjusted based on animal data. In other words, the operation plan of the feed robot may be adjusted to match current needs to enhance feed intake and avoid leftovers. The method comprises monitoring S1 over a time period subsequent to distributing feed 32 at the feed table 31, animal data acquired using tags carried by animals 10 in the livestock area. Monitoring S1 herein refers to obtaining animal data acquired at a plurality of different points in time. Animal data is provided in real time by an RTLS (Fig. 7). In embodiments not forming part of the claimed invention, the animal data may be received now and then. For example, storing animal data in the tags and retrieving the animal data from the tags when the animals get close to a tag reader. Tag readers are typically available around the feed table 31 and/or in the feeding zone 34.

That animal data is monitored subsequent to distributing feed typically refer to directly or soon after distributing feed, when feed is still available at the feed table. In some embodiments, the method comprises repetitively monitoring animal data with regular intervals (such as every 1-2 second) all the time as new feed is distributed when most of, or part of, the feed has been consumed.

The monitored animal data is indicative of respective positions of the animals 10 in the livestock area 30 in relation to a feed table 31. For example, the animal data is indicative of a real-time positions given by for example coordinates in a reference coordinate system. A RTLS 50 may position animals 10 with an accuracy below (i.e. more accurate than) one meter. The positions may also be less accurate. In some embodiments the positions are represented by identity of the closest tag reader of the animal.

As explained above the tags 51 may be configured to acquire further data in addition to the positions. Hence, in some embodiments, the monitored animal data is further indicative of poses and/or activities of the animals. In some embodiments, the activities indicated by the animal data comprise head movement associated with eating, and/or chewing activity associated with eating, stationarity, walking activity, restless behaviour and/or movement towards feed table.

The monitored animal data provided by the tags is then analysed to determine eating behaviour of the animals 1. In other words, the method comprises determining S2, based on the animal data indicative of respective positions of the animals in relation to the feed table, eating statuses of a plurality of individual animals 10 in the livestock area. The method comprises determining eating statuses based on whether the individual animals 10 are; eating A1 or not eating A2, are able to reach feed table B1 or are not able to reach the feed table B2 and whether the individual animals 10 are in the feeding zone C1 or outside the feeding zone C2 as explained in connection with Fig. 4A.

It must be noted that the eating statuses do not need to be explicitly determined by assigning a certain eating status to each animal, as in figure 4A. The eating status may alternatively be implicitly determined S2 by evaluating a condition associated with eating status. For example, in some embodiments determining eating statuses S2 comprises evaluating if a position or activity of an animal is associated with eating (for example if an animal is in the feeding zone) and using the output of such a determination to control the feed robot 1.

The animal data may be used to determine eating statuses of a plurality of individual animals as described in Fig. 4a. Eating statuses may also be determined for a group. In a less complex, eating statuses are determined S2 by counting how many animals have visited the feeding zone during the time period and assuming that all of them (or maybe a portion like 95%) have been eating. In some embodiments, eating statuses are determined S2 over the same time period as the animal data is monitored. Hence, time variations in the eating statuses may also be analysed. The determining S2 may be performed in real-time, continually or repetitively. In some embodiments, the determining is performed at isolated occasions when a decision about whether to operate the feed robot 1 or not is needed.

The determining S2 may be based on any information provided by the tags, such as activity data or data indicative of the animal's pose. In other words, in some embodiments the determining S2 is based on respective poses and/or activities of the individual animals 10.

For example, chewing activity or head movement associated with eating (i.e. bending down to pick up feed, or jerking the head to pick up feed) may be used to determine that an animal is eating A1. Also stationarity may be an indication that an animal is eating A1. In addition the animal's pose may indicate if it is able to eat (i.e. the animal is likely or possibly eating), for example if its head is above the feed, for example in a headlock. In other words, in some embodiments the method comprises determining S2a that animals are eating A1 based on the animal data indicating that their respective poses and/or activities are associated with eating.

In the other way around, lack of chewing, head movement or movement at a certain speed may be an indication that an animal is not eating A2. Also other activities like lying down, resting or even sleeping may be an indication that an animal is not eating A2. In other words, in some embodiments the method comprises determining S2a that animals are not eating A2 based on the animal data indicating that their respective poses and/or activities are disassociated with eating. Depending on which eating conditions are analysed there are various possibilities. For example, an animal walking towards the feed table 31 may be used to determine that an animal will soon eat, or resting or sleeping may indicate that an animal will not eat for a while and so on.

Determining whether animals are eating or not eating may in addition, or alternatively, be determined based on the animal's individual positions. Animal position may be used as a sole factor or in combination with other factors. In some embodiments, the determining S2 eating statuses comprises determining S2a that animals are eating A1 or not eating A2 based on their respective distances to the feed table indicated by the animal data. The distance is for example a distance within which an animal is able to reach the feed table 31 or the distance corresponds to the animal being inside the feeding zone 34.

The positions may alternatively be used to analyse the animal's intention to eat, i.e. if they appear to be hungry. This may be done by determining whether they are within reach of the feed table 31, e.g. if they are reaching their heads through the feed fence. If many animals are within reach of the feed table 31, but are not eating, this is an indication that there is an issue with the feed. Either there is no more feed left, or the feed that is left is so spread out that the animals cannot reach it. This could be remedied by operating the feed robot 1 to reposition feed on the feed table and/or by distributing more feed. For example, one might first try to reposition feed on the feed table, and as a second step to distribute more feed. If the animals still not eat, further investigation is needed. The reason may then be that the animals do not like the feed, or that the feed has poor quality. In other words, in some embodiments, the determining S2 eating statuses comprises determining S2b whether the animals are able to reach feed B1 or unable to reach the feed B2, based on the respective positions of the animals.

Animal presence in the feeding zone 31 is also relevant for determining eating status. As the feeding zone is right to the feed table 31, presence in the feeding zone 34 is an indication that an animal intends to eat, is eating or has just eaten. In other words, in some embodiments, the determining S2 eating statuses comprises determining S2c whether the animals are inside C1 or outside C2 the feeding zone 34, based on the respective positions of the animals. Examples of how this information can be used will be further explained below.

As mentioned above, time variations in the monitored eating statuses may then be analysed to determine when operation of the feed robot is needed. Hence, in some embodiments, the method comprises identifying S3 time patterns of the determined eating statuses.

For example popular times when many animals are eating or attempting to eat at the same time may be identified. A popular time may be a time when many animals are in the feeding zone C1. In other words, in some embodiments, the identifying S3 comprises determining S3a popular time periods during which more than a certain number of animals have eating status in feeding zone C1 and controlling S5a the operation based on the determined popular time periods. The certain number may be defined as a fraction of the total amount of animals or based on a maximum occupancy (how many animals can eat at the same time). Alternatively popular times may be defined as when many animals are eating A1, etc. At the popular times it is typically important to make sure that feed is delivered and pushed frequently, such that all animals 10 that want to eat have the possibility to do so. At the same time animals should be disturbed as little as possible.

It may also be relevant to determine unpopular (or idle) times. During such times feed delivery and pushing may be redundant or could be performed less frequently. However, during these time periods it may be good to perform cleaning and preparation of the feed table 31 for the next popular time. Feed distribution could also be performed to attract animals during idle times. Hence, in some embodiments, the identifying S3 comprises determining S3b idle time periods during which less than a certain number of animals have eating status in feeding zone C1 and controlling S5a the operation based on the determined idle time periods.

Based on the eating statuses the situation at and around the feed table 31 may be analysed. This involves both the status of the feed 32 and what happens around the feed table 31. Hence, in some embodiments, the method comprises a status at or around the feed table 31 based on the determined eating statuses.

For example, the monitored animal data be used to estimate occupancy at the feed table 31 over time. Occupancy may be determined for the entire feed table 31 or for parts of it, such as per feeding place. In some embodiments, one feeding place is a head lock. If head locks are available, a position of an animal 10 may be assigned to the nearest head lock to estimate occupancy of a corresponding feeding place at hourly intervals and summarized as daily reports. Without head locks, feeding places need to be mapped to specific areas at the feed table 31 to calculate occupation by over a time period over the area, and thus at those feeding places. A feeding place for a large animal is about 70 cm wide.

For example, a count of animals being within reach of the feed table B1 may be analysed over time. Alternatively, a number of animals within reach of the feed table B1 at a certain part (e.g. a predetermined area) may be analysed over time. As a further alternative a number of animals positioned at one particular feeding place may be analysed over time. In other words, in some embodiments, the method comprises determining S4a, based on the determined eating statuses, an occupancy at the feed table 31 and/or occupancies at individual parts of the feed table 31.

If occupancy at the feed table 31 is combined with a condition of eating A1, then feed intake or active eating time at the feed table 31 during the day may be estimated. Hence, in some embodiments, the method comprises determining S4, based on the determined eating statuses, an indication of an amount of feed consumed. The indication of an amount of feed consumed may be related to an accumulated active eating time at the feed table. If the feed table 31 is large, it may be more efficient to do this estimation for individual parts of the feed table 31, such as per alley. It is even possible to estimate feed consumed at individual feeding places.

As the amount of feed delivered is typically known, it is possible to determine or estimating an amount of feed left. In some embodiments, the method comprises determining S4, based on the determined eating statuses an (estimate of an) amount of feed available at the feed table 31. The amount of feed left may be determined per feeding place, for parts of the feed table 31 or for the entire feed table 31. This is of course useful to determine if feed delivery is needed.

A further insight that may be utilized is that the feed distribution will typically affect the animals' behaviour. For example, if one part of the feed table 31 is empty, or if feed is spread out so it is out of reach of the animals 10, then the animals may avoid that part. This is illustrated in Fig. 3 where it is visible that occupancy is lower at the middle of the feed table where there is not so much feed 32 left.

Alternatively, the animals may go to places where there is no or little feed, but they cannot eat, which is detectable by lack of activity associated with eating A1. Hence, by analysing the eating statuses conclusions may be drawn about the distribution of feed 32 at the feed table 31. In some embodiments, the method comprises determining S4, based on the determined eating statuses a distribution of feed at the feed table. The distribution of feed may be a distribution of feed along the feed fence and/or a distribution of feed away from the feed fence (e.g. not within reach for animals).

The feed robot 1 is then controlled based on the insights that can be gained from the animal data. In other words, the method comprises controlling S5 operation of the autonomous feed robot 1 based on the determined eating statuses of the plurality of individual animals. The controlling S5 is typically implemented by sending control data to the feed robot 1. The determining eating statuses S2 and controlling S5 is typically performed using a predefined criteria or rules. The criteria or rules may be implemented by an algorithm (or computer logic) that takes animal data as input and provides control data as output. This algorithm may be very simple or more complex. Also machine learning or artificial intelligence may be used to create and update the algorithm. The algorithm may take further parameters as input such as what was fed and when. The algorithm may also take information about priority of animals as input. Priority may be set on age, health, calving, or other conditions.

A simple example is first described. This example comprises determining presence of animals along the feed fence 33 and also chewing/eating activity among these animals during a time period. This corresponds to determining S2 eating statuses. The feed robot is then controlled S5 to start operating if the total time of presence and chewing activity exceeding a predefined threshold defining a total amount of eating (i.e. accumulated time of eating) performed by a plurality of animals. The predefined threshold is set based on an assumption that feed delivery is needed after that amount of eating. This step corresponds to controlling S5 the feed robot based on the eating statuses.

Animals do not evenly use feeding places at the feed table 31 for different reasons. For example, to avoid other animals or just because they like a certain place. If the feed table 31 has a considerable size, it is typically desirable to perform the control differently at different parts or zones of the feed table 31 as the need will typically differ. If the animals 10 have eaten all feed at one part of the feed table 31 it does not make sense to operate the feed robot over the entire feed table. Hence, in some embodiments, the method comprises controlling S5a the operation in individual parts or zones of the livestock area, based on eating statuses of animals present in the respective individual parts or zones. For example, the feed robot 1 is controlled to drive to a place that needs intervention, to move or distribute feed there and then drive to the next place that needs intervention.

The eating statuses may also be used to determine best points in time to operate the feed robot 1. The best point is defined as the best point in time to drive in fresh feed during the day to achieve highest and most even feeding place occupancy in the barn section. In addition from a time pattern of the eating statuses it may be estimated when the animals 10 want to eat, and thus when they will intend to eat. Hence, in some embodiments, the method comprises controlling S5b operation is based on the identified time patterns.

Apart from managing best time points for sending a feed pusher, the controlling may be performed to match best time points to drive in fresh feed during the day and the best number of feedings to achieve highest and most even feeding place occupancy in the barn section. In other words, in some embodiments, the method comprises controlling S5c the operation based on the determined status at the feed table 31.

In some embodiments, the method comprises controlling S5c the operation in individual parts or zones of the livestock area, based on occupation in the individual parts or zones. Uneven occupation can indicate problems with animal traffic, hierarchy, and/or overcrowding. Each livestock area 30 with a feed table 31 will typically have its own feed table occupancy pattern, which depends on animals, design, feed etc. After fresh feed 32 has been delivered to the feed table 31, it is expected that occupation time per feeding place will be at a maximum (with respect to a feed table occupancy pattern) at all feeding places. When occupation decreases it indicates that there is less feed 32 at the feed table 31. If an automatic feeding system is in place, the information on feeding place occupancy may be used to determine the times when fresh feed is delivered and also how much feed 32 to deliver at different feeding places at the feed table 31.

In some embodiments, the feed robot 1 is controlled to start operating after a predefined decrease in occupancy time per feeding place or number of feeding places not occupied within the last hour. Occupancy may be used in combination with eating activity. For example, an automatic feed pusher is activated to treat the areas at the feed table 31 according to occupancy determined S2 based on animal data. For example, feed pushing may be performed all over the feed table while feed delivery is only performed in areas with low (or without) occupation as that indicates that no feed is available there.

If an indication of an amount of feed consumed or of an amount of feed available at the feed table 31 has been determined S4 then operation may be controlled based on the determined amount of feed. Similarly, if a distribution of feed 32 has been determined S4 then operation may be controlled based on the determined distribution. Feed will then be delivered when most of the delivered feed has been consumed or when there is none or little feed left. The delivery may of course be performed differently to individual parts of the table as described above.

As explained above, the controlling as such may be performed in different ways. According to the invention, the controlling S5d operation comprises triggering S5d the feed robot to start and/or stop operating. In other words, the schedule or times to operate the feed robot 1 is determined based on the eating statuses. This may be achieved by configuring an operation schedule or plan of the feed robot based on historical eating statuses of the animals. The schedule will be based on best times for feeding something new e.g. after milking. Alternatively, the feed robot may be triggered to start or stop operating in real-time, based on current eating statuses and even based on historical eating statuses. In other words, in some embodiments the controlling S5 comprises generating a trigger causing the feed robot to start or stop operating.

Additionally or alternatively, the controlling comprises controlling how or where the feed robot operates. More specifically the method comprises adjusting a trajectory of the feed robot 1. In this way it is possible to control where the feed robot 1 runs and how fast it runs, based on need indicated by the eating statuses. In addition the activity of the feed robot may be controlled, such as what it does and where it does it. For example, the feed robot 1 may be controlled S5 to have different operation modes, such as pushing feed and delivering feed (or simply just moving). Different operation modes may be activated in different places, based on need indicated by the eating statuses. In other words, in some embodiments, the controlling operation S5 comprises adjusting S5e a trajectory, speed and or operation mode of the feed robot.

In addition to controlling operation of the feed robot 1, the eating statuses may be used to trigger alerts in certain situations, such as when occupancy per feeding place is significantly changing in relation to the expected occupancy or to a goal for a specific group of animals. Typical situations could be changes in the ration or overcrowding. In this way farmers can get alerts if behaviours of different feeding groups differ significantly. This could simply comprise indicating deviations from expected differences between a group of first lactation animals and older animals, early vs. late lactation etc. However, if farmers distribute animals more randomly into each feeding group, a significant change between groups should trigger further investigation and intervention. In other words, in some embodiments, the method comprises determining S6, a conflict situation not solvable by the feed robot based on the eating statuses and providing an alert to a user in response to detecting the conflict situation. This feature could be combined with some kind of self-learning. For example, the alert is sent if the feed robot was sent the last time this problem occurred, but it did not resolve the issue.

An alert may also be generated when many animals are close to the feed table 31 but do not eat and when it has been confirmed that feed has been delivered and pushed. In this situation a reason may be that the animals do not like the food or that something wrong with the food, such as texture, composition etc. In other words, in some embodiments, the conflict situation comprises that a time average of a count of animals that are "able to reach feed B1" and "not eating A2" falling below a threshold value.

An alarm or alert may also be triggered when the total amount of eating A1 falls below a threshold, as this is typically an indication about some kind of anomaly that might cause insufficient nutrition. Hence, in some embodiments, the conflict situation comprises that a time average of a count of animals that are "eating A1", exceeds or falls below, a threshold value.

Another situation that could trigger an alert is detection of uneven distribution of animals long the feed table. An uneven distribution may be an indication of anormal animal traffic, animal hierarchies or overcrowding and might require other measures such as regrouping of animals or similar. In other words, in some embodiments, the conflict situation comprises that a distribution of animals positioned at different parts of the feed table 31 deviating from an expected distribution with more than a certain amount.

Some example embodiments of how the algorithm used for controlling S5 the feed robot may be implemented will now be described by some examples.

One scenario that might be relevant to consider when controlling S5 the feed robot is that many animals are present at the feed table at the same time and within reach of the feed table B1, but that they are not eating A2. This might be an indication that feed is out of reach of the animals 10, that there is no feed or that the animals 10 simply do not like the feed. This may be remedied by first trying to push the feed closer and then if that does not resolve the problem try to deliver more feed. If that does also not resolve the problem an alert is triggered to the farmer as there may be a problem with the feed itself. In other words, in some embodiments, the method comprises initiating feed distribution and/or feed pushing upon a count of animals 10 having eating status not eating A2 and able to reach feed table B1 exceeding a predetermined threshold during a certain time period.

Another scenario that might be relevant to consider when controlling S5 the feed robot is that many animals queueing but not eating. More specifically, there might be a scenario when many animals are in the feeding zone, which indicates that they want to, or attempt to, eat, while at the same time eating activity among the queuing animals 10 is very low. This may be an indication that there is too little feed 32 or that the feed 32 is too spread out. Hence, an attempt to push the feed or deliver more feed may be relevant. In other words, in some embodiments, the method comprises initiating feed distribution and/or feed pushing upon a count of animals 10 having eating status in feeding zone C1 and not eating A2, exceeding a predetermined threshold during a certain time period. However, if feed has just been pushed and/or delivered then the farmer should be alerted as there might be a problem of animal aggression or fighting that prevents the animals from eating.

Another scenario that might be relevant to consider when controlling S5 the feed robot is that a plurality of animals stands still around the feed table 31, but not close enough to eat, because they cannot get access. For example, they are prevented by other animals in front of them, as illustrated in Fig. 3 where some animals 10' are blocked from access by other animals. The reason might be that some areas are empty (or that feed is too spread out there) so that there is a queue where feed is accessible. In other words, in some embodiments, the method comprises initiating feed distribution and/or feed pushing upon a count of animals 10 that having status in feeding zone C1 and unable to reach feed table B2 exceeding a predetermined threshold during a certain time period.

Fig. 6 illustrates a control device 100 for operating a feed robot 1 at a feed table 31 in a livestock area 30, according to the second aspect in more detail. The control device 100 is communicates with a feed robot 1 and with a real time location system, RTLS, 50. In some embodiments the control device 100 is a functional unit. Hence, the control device 100 may be distributed between a plurality of physical control units, some of which may be located in the livestock area and some of which may be remote from the livestock area 1. In some embodiments, the control device 100 is at least partly implemented in the feed robot 1. In some embodiments, the control device 100 is included in a livestock management system.

The control device 100 comprises hardware and software. The hardware is for example various electronic components on a for example a Printed Circuit Board, PCB. The most important of those components is typically a processor 101 e.g. a microprocessor, along with a memory 102 e.g. EPROM or a Flash memory chip. The software is typically software code that runs in the microcontroller. The illustrated control device 100 also comprises a communication interface 103. The communication interface 103 is configured for communication of signals and/or data between the control device 100 and other devices, such as the feed robot 1 and the RTLS, 50. The communication interface 103 is configured for wireless communication, using any suitable protocol e.g. Bluetooth or IEEE 802.11. The communication interface 103 may also be configured for wired communication, for example via a docking station. The communication interface 103 is for example configured to communicate with (a control system 52 (Fig. 7) of) the RTLS 50 and with the feed robot 1. In particular the control device 100 is configured to obtain animal data acquired using tags 51 (Fig. 7) carried by the animals 1. In some embodiments the communication interface 103 is configured to communicate with a remotely or locally arranged server. The control device 100 is configured to control the operation of the feed robot 1 by sending control data to the feed robot over the communication interface 103. Thus, some or all of the operation of the feed robot 1 may be remotely controlled by the control device 100.

More specifically the control device 100 is configured to monitor over a time period subsequent to distributing feed at the feed table, animal data acquired using tags carried by animals 10 in the livestock area 30. The animal data is indicative of respective positions of the animals in the livestock area 30 in relation to a feed table 31 in the livestock area, as explained above. The control device is also configured to control operation of the autonomous feed robot 1 based on the determined eating statuses of the plurality of individual animals. In addition the control device 100 is configured to perform one or more or all of the embodiments of the method described in connection with Fig. 5.

Fig. 7 illustrates an example of an RTLS 50 that may be used by the proposed method and control device 100. The RTLS also comprises readers 54 that receive wireless signals from these tags 51 to determine their locations. The wireless communication includes, but is not limited to, a cellular radio, a WiFi radio, a Bluetooth radio, a Bluetooth low energy radio, UltraWideBand radio or any other appropriate radio frequency communication protocol. The particular number and placement of the readers 54 will depend on the size and shape of a tracking zone 53, for example the livestock area 300, being monitored.

In some embodiments the tags 51 also comprise orientation sensors configured to generate data indicative of the orientation of the sensor, such as a three-axis accelerometer assembly or a gyro assembly. The tags 51 may also include other sensors or components, such as object monitoring sensors. The object monitoring sensors may comprise a thermometer, a heart rate monitor, a vibration sensor, a camera, a microphone, or any other appropriate device.

When the RTLS 50 is in use, the location of each tag 51 is tracked in real-time within the tracking zone 53 using multi-lateration techniques known in the art, for example using Time Difference of Arrival and Received Signal Strength Indicator techniques. To this end, data from the readers 54 is supplied to a control system 52 that determines, in real-time basis, the instantaneous position of each tag 51 in the tracking zone 53. The control system 52 may be implemented as a computer-based system that is capable of executing computer applications. An exemplary application of the control system 52 includes a real-time location function, configured to determine a two- or three-dimensional position of the tag 51 within a tracking zone 53. The control system 52 may for example use triangulation of data provided by three or more readers 54 to determine the location of the tags 51.

In some embodiments, the control system 52 is configured to determine a movement of the tags 51, including for example direction of movement and amount of movement. In some embodiments, the control system 52 is configured to determine an orientation of the tag 51. In some embodiments, the control system 52 is configured to discriminate between different activities of an animal 10 wearing the tag 51 based upon the location, movement and orientation of the animal's tag within the tracking zone 53. For example, the control system is configured to detect eating and/or activities associated with eating, such as chewing activity associated with eating.

The control system 52 may also have one or more communications interfaces. The communications interfaces may include for example, a modem and/or a network interface card. The communications interfaces enable the control system 52 to send and receive data to and from other computing devices such as a control device 100 of Fig. 3). The communications interface also enables the control system 52 to receive messages and data from the readers 54 or from the tags 51 either directly or via another communications network. The communications network may be any network platform and may include multiple network platforms. Exemplary network platforms include, but are not limited to, a WiFi network, a cellular network, etc.

The terminology used in the description of the embodiments as illustrated in the accompanying drawings is not intended to be limiting of the described method, control device or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

## Claims

1. A method for operating a feed robot (1) at a feed table (31) in a livestock area (30), the method comprising:
- monitoring (S1) over a time period subsequent to distributing feed (32) at the feed table (31), animal data acquired by a real-time location system, using tags carried by animals (10) in the livestock area and indicative of respective positions of the animals (10) in the livestock area (30) in relation to the feed table (31),
- determining (S2), based on the animal data indicative of respective positions of the animals in relation to the feed table, eating statuses of a plurality of individual animals (10) in the livestock area, wherein the determining (S2) eating statuses comprises determining one or more of:
• whether the individual animals (10) are eating (A1) or not eating (A2),
• whether the individual animals (10) are able to reach feed table (B1) or are not able to reach the feed table (B2) and
• whether the individual animals (10) are in a feeding zone (C1) or outside the feeding zone (C2), wherein the feeding zone (34) is a predefined area in which an animal that is eating (A1) or is attempting to eat is expected to reside, and
- controlling (S5) operation of the autonomous feed robot (1) based on the determined eating statuses of the plurality of individual animals, wherein the controlling (S5) comprises triggering (S5d) the feed robot to start and/or stop operating, and/or adjusting (S5e) a trajectory, speed and/or operation mode of the feed robot.

2. The method according to claim 1, wherein the monitored animal data is further indicative of activities of the animals, which activities comprise head movement associated with eating, and/or chewing activity associated with eating, stationarity, walking activity, restless behaviour and/or movement towards feed table, and determining (S2) eating statuses further based on respective activities of the individual animals (10), preferably wherein the determining (S2) eating statuses comprises one or more of:
- determining (S2a) that animals are eating (A1) based on the animal data indicating that their respective activities are associated with eating and
- determining (S2a) that animals are not eating (A2) based on the animal data indicating that their respective activities are disassociated with eating.

3. The method according to any one of the preceding claims, wherein the determining (S2) eating statuses comprises determining (S2a) that animals are eating (A1) or not eating (A2) based on their respective distances to the feed table indicated by the animal data, and/or wherein the determining (S2) eating statuses comprises determining (S2b) whether the animals are able to reach feed (B1) or unable to reach the feed (B2), based on the respective positions of the animals, and/or wherein the determining (S2) eating statuses comprises determining (S2c) whether the animals are inside (C1) or outside (C2) the feeding zone (34), based on the respective positions of the animals.

4. The method according to any one of the preceding claims, wherein the controlling (S5) operation comprises controlling (S5a) operation in individual parts or zones of the livestock area, based on eating statuses of animals present in the respective individual parts or zones.

5. The method according to any one of the preceding claims, the method comprises:
- identifying (S3) time patterns of the determined eating statuses, and wherein the controlling (S5) comprises controlling (S5b) the operation of the feed robot based on the identified time patterns,
wherein the identifying (S3) comprises determining (S3a) popular time periods during which more than a certain number of animals have eating status in feeding zone (C1) and controlling (S5b) the operation based on the determined popular time periods, or wherein the identifying (S3) comprises determining (S3b) idle time periods during which less than a certain number of animals have eating status in feeding zone (C1) and controlling (S5b) the operation based on the determined idle time periods.

6. The method according to any one of the preceding claims comprising:
- determining (S4), based on the determined eating statuses, a status at the feed table (31),
- controlling (S5c) the operation of the feed robot (1) based on the determined status at the feed table (31), wherein the status at the feed table (31) comprises one or more of; an indication of an amount of feed consumed, an amount of feed available at the feed table (31), a distribution of feed at the feed table, an occupancy at the feed table (31) and an occupancy at individual parts of the feed table (31).

7. The method according to any one of the preceding claims, wherein the controlling (S5) operation comprises initiating feed distribution and/or feed pushing upon a count of animals (10) having eating status not eating (A2) and able to reach feed table (B1) exceeding a predetermined threshold during a certain time period, and/or wherein the controlling (S5) operation comprises initiating feed distribution and/or feed pushing upon a count of animals (10) having eating status in feeding zone (C1) and not eating (A2), exceeding a predetermined threshold during a certain time period, and/or wherein the controlling (S5) operation comprises initiating feed distribution and/or feed pushing upon a count of animals (10) that having status in feeding zone (C1) and unable to reach feed table (B2) exceeding a predetermined threshold during a certain time period.

8. The method according to any one of the preceding claims, comprising:
- determining (S6), based on the eating statuses, a conflict situation not solvable by the feed robot and providing an alert to a user in response to detecting the conflict situation, wherein the conflict situation comprises one or more of:
• that a time average of a count of animals that are "able to reach feed (B1)" and "not eating (A2)" falling below a threshold value,
• that a time average of a count of animals that are "eating (A1)", exceeds or falls below, a threshold value.
• that a distribution of animals positioned at different parts of the feed table (31) deviating from an expected distribution with more than a certain amount.

9. A control device (100) for operating a feed robot (1) at a feed table 31) in a livestock area (30), the control device (10) being configured to:
- monitor over a time period subsequent to distributing feed at the feed table, animal data acquired by a real-time location system, using tags carried by animals (10) in the livestock area (30) and indicative of respective positions of the animals in the livestock area (30) in relation to a feed table (31),
- determine, based on the animal data indicative of respective positions of the animals in relation to the feed table, eating statuses of a plurality of individual animals (10) in the livestock area, wherein the determining (S2) eating statuses comprises determining one or more of:
• whether the individual animals (10) are eating (A1) or not eating (A2),
• whether the individual animals (10) are able to reach feed table (B1) or are not able to reach the feed table (B2) and
• whether the individual animals (10) are in a feeding zone (C1) or outside the feeding zone (C2), wherein the feeding zone (34) is a predefined area in which an animal that is eating (A1) or is attempting to eat is expected to reside, and
- control operation of the autonomous feed robot (1) based on the determined eating statuses of the plurality of individual animals, wherein the controlling (S5) comprises triggering (S5d) the feed robot to start and/or stop operating, and/or adjusting (S5e) a trajectory, speed and/or operation mode of the feed robot.

10. The control device (100) according to claim 9, wherein the control device (10) is configured to perform the method of any one of claims 2 to 8.

## Patentansprüche

1. Verfahren zum Betreiben eines Fütterungsroboters (1) an einem Futtertisch (31) in einem Viehbereich (30), das Verfahren umfassend
- Überwachen (S1), über einen Zeitraum im Anschluss an das Verteilen von Futter (32) an dem Futtertisch (31), von Tierdaten, die durch ein Echtzeit-Ortungssystem erfasst werden, unter Verwendung von Marken, die von den Tieren (10) in dem Viehbereich getragen werden, und die jeweilige Positionen der Tiere (10) in dem Viehbereich (30) in Bezug auf den Futtertisch (31) angeben,
- Bestimmen (S2), basierend auf den Tierdaten, die jeweilige Positionen der Tiere in Bezug auf den Futtertisch angeben, von Fressstatus einer Vielzahl von einzelnen Tieren (10) in dem Viehbereich, wobei das Bestimmen (S2) von Fressstatus das Bestimmen eines oder mehrerer von Folgendem umfasst:
• ob die einzelnen Tiere (10) fressen (A1) oder nicht fressen (A2),
• ob die einzelnen Tiere (10) in der Lage sind, den Futtertisch (B1) zu erreichen oder nicht in der Lage sind, den Futtertisch (B2) zu erreichen und
• ob die einzelnen Tiere (10) in einer Fütterungszone (C1) oder außerhalb der Fütterungszone (C2) sind, wobei die Fütterungszone (34) ein vordefinierter Bereich ist, in dem sich ein Tier, das frisst (A1) oder versucht zu Fressen, erwartungsgemäß befindet, und
- Steuern (S5) eines Betriebs des autonomen Fütterungsroboters (1), basierend auf den bestimmten Fressstatus der Vielzahl von einzelnen Tieren, wobei das Steuern (S5) das Auslösen (S5d) des Fütterungsroboters zum Starten und/oder Stoppen des Betriebs und/oder das Anpassen (S5e) eines Wegs, einer Geschwindigkeit und/oder eines Betriebsmodus des Fütterungsroboters umfasst.

2. Verfahren nach Anspruch 1, wobei die überwachten Tierdaten ferner Aktivitäten der Tiere angeben, wobei die Aktivitäten Kopfbewegungen umfassen, die mit einer Fress- und/oder Kauaktivität verknüpft sind, die mit einer Fress-, Stationaritäts-, Laufaktivität, unruhigem Verhalten und/oder einer Bewegung zu dem Futtertisch hin verknüpft ist, und Bestimmen (S2) von Fressstatus, ferner basierend auf jeweiligen Aktivitäten der einzelnen Tiere (10), vorzugsweise wobei das Bestimmen (S2) von Fressstatus eines oder mehrere von Folgendem umfasst:
- Bestimmen (S2a), dass Tiere fressen (A1), basierend auf den Tierdaten, die angeben, dass ihre jeweiligen Aktivitäten mit dem Fressen verknüpft sind, und
- Bestimmen (S2a), dass Tiere nicht fressen (A2), basierend auf den Tierdaten, die angeben, dass ihre jeweiligen Aktivitäten nicht mit dem Fressen verknüpft sind.

3. Verfahren nach einem der vorstehenden Ansprüche, wobei das Bestimmen (S2) der Fressstatus das Bestimmen (S2a) umfasst, dass Tiere fressen (A1) oder nicht fressen (A2), basierend auf ihren jeweiligen Abständen zu dem Futtertisch, die durch die Tierdaten angegeben werden, und/oder wobei das Bestimmen (S2) der Fressstatus das Bestimmen (S2b) umfasst, ob die Tiere in der Lage sind, das Futter (B1) zu erreichen oder nicht in der Lage sind, das Futter (B2) zu erreichen, basierend auf den jeweiligen Positionen der Tiere, und/oder wobei das Bestimmen (S2) der Fressstatus das Bestimmen (S2c) umfasst, ob die Tiere innerhalb (C1) oder außerhalb (C2) der Fütterungszone (34) sind, basierend auf den jeweiligen Positionen der Tiere.

4. Verfahren nach einem der vorstehenden Ansprüche, wobei das Steuern (S5) des Betriebs das Steuern (S5a) des Betriebs in einzelnen Teilen oder Zonen des Viehbereichs, basierend auf den Fressstatus von Tieren, die in den jeweiligen einzelnen Teilen oder Zonen anwesend sind, umfasst.

5. Verfahren nach einem der vorstehenden Ansprüche, wobei das Verfahren umfasst:
- Identifizieren (S3) von Zeitmustern der bestimmten Fressstatus, und wobei das Steuern (S5) das Steuern (S5b) des Betriebs des Fütterungsroboters basierend auf den identifizierten Zeitmuster umfasst,
wobei das Identifizieren (S3) das Bestimmen (S3a) beliebter Zeiträume umfasst, während denen mehr als eine gewisse Anzahl von Tieren einen Fressstatus in der Fütterungszone (C1) aufweisen, und Steuern (S5b) des Betriebs basierend auf den bestimmten beliebten Zeiträumen, oder wobei das Identifizieren (S3) das Bestimmen (S3b) ungenutzter Zeiträume umfasst, während denen weniger als eine gewisse Anzahl von Tieren einen Fressstatus in der Fütterungszone (C1) aufweisen, und Steuern (S5b) des Betriebs basierend auf den bestimmten ungenutzten Zeiträumen.

6. Verfahren nach einem der vorstehenden Ansprüche, umfassend:
- Bestimmen (S4), basierend auf den bestimmten Fressstatus, eines Status an dem Futtertisch (31),
- Steuern (S5c) des Betriebs des Fütterungsroboters (1) basierend auf dem bestimmten Status an dem Fütterungstisch (31), wobei der Status an dem Fütterungstisch (31) eines oder mehrere von Folgendem umfasst: eine Angabe einer verbrauchten Futtermenge, einer Futtermenge, die an dem Futtertisch (31) verfügbar ist, einer Futterverteilung an dem Futtertisch, einer Belegung an dem Futtertisch (31) und einer Belegung einzelner Teile des Futtertisches (31).

7. Verfahren nach einem der vorstehenden Ansprüche, wobei das Steuern (S5) des Betriebs das Einleiten der Futterverteilung und/oder des Futterschiebens umfasst, wenn eine Anzahl von Tieren (10), die den Fressstatus "Nicht fressen" (A2) aufweisen und in der Lage sind, den Futtertisch (B1) zu erreichen, eine vorbestimmte Schwelle während eines gewissen Zeitraums überschreitet, und/oder wobei das Steuern (S5) des Betriebs das Einleiten der Futterverteilung und/oder des Futterschiebens umfasst, wenn eine Anzahl von Tieren (10), die den Fressstatus in der Fütterungszone (C1) aufweisen und nicht fressen (A2), eine vorbestimmte Schwelle während eines gewissen Zeitraums überschreitet, und/oder wobei das Steuern (S5) des Betriebs das Einleiten der Futterverteilung und/oder des Futterschiebens umfasst, wenn eine Anzahl von Tieren (10), die den Status in der Fütterungszone (C1) aufweisen und nicht in der Lage sind, den Futtertisch (B2) zu erreichen, eine vorbestimmte Schwelle während eines gewissen Zeitraums überschreitet.

8. Verfahren nach einem der vorstehenden Ansprüche, umfassend:
- Bestimmen (S6), basierend auf den Fressstatus, einer Konfliktsituation, die durch den Fütterungsroboter nicht lösbar ist, und Bereitstellen einer Warnung an einen Benutzer als Reaktion auf das Erkennen der Konfliktsituation, wobei die Konfliktsituation eines oder mehrere von Folgendem umfasst:
• dass ein zeitlicher Durchschnitt einer Anzahl von Tieren, die "in der Lage sind, Futter zu erreichen (B1)" und "nicht fressen (A2)", unter einen Schwellenwert fällt,
• dass ein zeitlicher Durchschnitt einer Anzahl von Tieren, die "fressen (A1)", einen Schwellenwert überschreitet oder unter diesen fällt.
• dass eine Verteilung von Tieren, die an unterschiedlichen Teilen des Futtertisches (31) positioniert sind, von einer erwarteten Verteilung um mehr als eine gewisse Menge abweicht.

9. Steuervorrichtung (100) zum Betreiben eines Fütterungsroboters (1) an einem Futtertisch (31) in einem Viehbereich (30), wobei die Steuervorrichtung (10) konfiguriert ist zum:
- Überwachen, über einen Zeitraum im Anschluss an das Verteilen von Futter an dem Futtertisch, von Tierdaten, die durch ein Echtzeit-Ortungssystem erfasst werden, unter Verwendung von Marken, die von den Tieren (10) in dem Viehbereich (30) getragen werden, und die jeweilige Positionen der Tiere in dem Viehbereich (30) in Bezug auf den Futtertisch (31) angeben,
- Bestimmen, basierend auf den Tierdaten, die jeweilige Positionen der Tiere in Bezug auf den Futtertisch angeben, von Fressstatus einer Vielzahl von einzelnen Tieren (10) in dem Viehbereich, wobei das Bestimmen (S2) von Fressstatus das Bestimmen eines oder mehrerer von Folgendem umfasst:
• ob die einzelnen Tiere (10) fressen (A1) oder nicht fressen (A2),
• ob die einzelnen Tiere (10) in der Lage sind, den Futtertisch (B1) zu erreichen oder nicht in der Lage sind, den Futtertisch (B2) zu erreichen und
• ob die einzelnen Tiere (10) in einer Fütterungszone (C1) oder außerhalb der Fütterungszone (C2) sind, wobei die Fütterungszone (34) ein vordefinierter Bereich ist, in dem sich ein Tier, das frisst (A1) oder versucht zu Fressen, erwartungsgemäß befindet, und
- Steuern des Betriebs des autonomen Fütterungsroboters (1) basierend auf den bestimmten Fressstatus der Vielzahl von einzelnen Tieren, wobei das Steuern (S5) das Auslösen (S5d) des Fütterungsroboters zum Starten und/oder Stoppen des Betriebs und/oder das Anpassen (S5e) eines Wegs, einer Geschwindigkeit und/oder eines Betriebsmodus des Fütterungsroboters umfasst.

10. Steuervorrichtung (100) nach Anspruch 9, wobei die Steuervorrichtung (10) konfiguriert ist, um das Verfahren nach einem der Ansprüche 2 bis 8 durchzuführen.

## Revendications

1. Procédé permettant de faire fonctionner un robot d'alimentation (1) au niveau d'une table d'alimentation (31) dans une zone d'élevage (30), le procédé comprenant
- la surveillance (S1), pendant une période de temps suivant la répartition de nourriture (32) au niveau de la table d'alimentation (31), de données d'animal acquises par un système de localisation en temps réel, à l'aide d'étiquettes portées par des animaux (10) dans la zone d'élevage et indiquant des positions respectives des animaux (10) dans la zone d'élevage (30) par rapport à la table d'alimentation (31),
- le fait de déterminer (S2), sur la base des données d'animal indiquant des positions respectives des animaux par rapport à la table d'alimentation, de statuts alimentaires d'une pluralité d'animaux individuels (10) dans la zone d'élevage, dans lequel le fait de déterminer (S2) des statuts alimentaires comprend le fait de déterminer un ou plusieurs parmi :
• si les animaux individuels (10) mangent (A1) ou ne mangent pas (A2),
• si les animaux individuels (10) peuvent atteindre la table d'alimentation (B1) ou ne peuvent pas atteindre la table d'alimentation (B2) et
• si les animaux individuels (10) se trouvent dans une zone d'alimentation (C1) ou en dehors de la zone d'alimentation (C2), dans lequel la zone d'alimentation (34) est une zone prédéfinie dans laquelle un animal qui mange (A1) ou tente de manger est censé résider, et
- la commande (S5) du fonctionnement du robot d'alimentation autonome (1) sur la base des statuts alimentaires déterminés de la pluralité d'animaux individuels, dans lequel la commande (S5) comprend le déclenchement (S5d) du démarrage et/ou de l'arrêt du fonctionnement du robot d'alimentation, et/ou le réglage (S5e) d'une trajectoire, d'une vitesse et/ou d'un mode de fonctionnement du robot d'alimentation.

2. Procédé selon la revendication 1, dans lequel les données d'animal surveillées indiquent en outre des activités des animaux, lesquelles activités comprennent le mouvement de tête associé à l'alimentation, et/ou l'activité de mastication associée à l'alimentation, la stationnarité, l'activité de marche, le comportement agité et/ou le déplacement vers la table d'alimentation, et le fait de déterminer (S2) des statuts alimentaires sur la base des activités respectives des animaux individuels (10), de préférence dans lequel le fait de déterminer (S2) des statuts alimentaires comprend un ou plusieurs parmi :
- le fait de déterminer (S2a) que des animaux mangent (A1) sur la base des données d'animal indiquant que leurs activités respectives sont associées à l'alimentation, et
- le fait de déterminer (S2a) que les animaux ne mangent pas (A2) sur la base des données d'animal indiquant que leurs activités respectives sont dissociées de l'alimentation.

3. Procédé selon l'une quelconque des revendications précédentes, dans lequel le fait de déterminer (S2) des statuts alimentaires comprend le fait de déterminer (S2a) que des animaux mangent (A1) ou ne mangent pas (A2) sur la base de leurs distances respectives par rapport à la table d'alimentation indiquée par les données d'animal, et/ou dans lequel le fait de déterminer (S2) des statuts alimentaires comprend le fait de déterminer (S2b) si les animaux peuvent atteindre la nourriture (B1) ou ne peuvent pas atteindre la nourriture (B2), sur la base des positions respectives des animaux, et/ou dans lequel le fait de déterminer (S2) des statuts alimentaires comprend le fait de déterminer (S2c) si les animaux se trouvent à l'intérieur (C1) ou à l'extérieur (C2) de la zone d'alimentation (34), sur la base des positions respectives des animaux.

4. Procédé selon l'une quelconque des revendications précédentes, dans lequel la commande (S5) du fonctionnement comprend la commande (S5a) du fonctionnement dans des parties ou zones individuelles de la zone d'élevage, sur la base des statuts alimentaires des animaux présents dans les parties ou zones individuelles respectives.

5. Procédé selon l'une quelconque des revendications précédentes, le procédé comprenant :
- l'identification (S3) des schémas temporels des statuts alimentaires déterminés, et dans lequel la commande (S5) comprend la commande (S5b) du fonctionnement du robot d'alimentation sur la base des schémas temporels identifiés,
dans lequel l'identification (S3) comprend le fait de déterminer (S3a) des périodes populaires pendant lesquelles plus d'un certain nombre d'animaux ont un statut alimentaire dans la zone d'alimentation (C1) et la commande (S5b) du fonctionnement sur la base des périodes populaires déterminées, ou dans lequel l'identification (S3) comprend le fait de déterminer (S3b) des périodes d'inactivité pendant lesquelles moins d'un certain nombre d'animaux ont un statut alimentaire dans la zone d'alimentation (C1) et la commande (S5b) du fonctionnement sur la base des périodes d'inactivité déterminées.

6. Procédé selon l'une quelconque des revendications précédentes, comprenant :
- le fait de déterminer (S4), sur la base des statuts alimentaires déterminés, un statut au niveau de la table d'alimentation (31),
- la commande (S5c) du fonctionnement du robot d'alimentation (1) sur la base du statut déterminé au niveau de la table d'alimentation (31), dans lequel le statut au niveau de la table d'alimentation (31) comprend un ou plusieurs parmi ; une indication d'une quantité de nourriture consommée, d'une quantité de nourriture disponible au niveau de la table d'alimentation (31), d'une répartition de nourriture au niveau de la table d'alimentation, d'une occupation au niveau de la table d'alimentation (31) et d'une occupation au niveau de certaines parties de la table d'alimentation (31).

7. Procédé selon l'une quelconque des revendications précédentes, dans lequel la commande (S5) du fonctionnement comprend le lancement de la répartition de nourriture et/ou de la poussée de nourriture sur un nombre d'animaux (10) ayant un statut alimentaire ne mangeant pas (A2) et pouvant atteindre la table d'alimentation (B1) dépassant un seuil prédéterminé pendant une certaine période de temps, et/ou dans lequel la commande (S5) du fonctionnement comprend le lancement de la répartition de nourriture et/ou de la poussée de nourriture sur un nombre d'animaux (10) ayant un statut alimentaire dans la zone d'alimentation (C1) et ne mangeant pas (A2), dépassant un seuil prédéterminé pendant une certaine période de temps, et/ou dans lequel la commande (S5) du fonctionnement comprend le lancement de la répartition de nourriture et/ou de la poussée de nourriture sur un nombre d'animaux (10) ayant un statut dans la zone d'alimentation (C1) et ne pouvant pas atteindre la table d'alimentation (B2) dépasse un seuil prédéterminé pendant une certaine période de temps.

8. Procédé selon l'une quelconque des revendications précédentes, comprenant :
- le fait de déterminer (S6), sur la base des statuts alimentaires, une situation de conflit qui ne peut être résolue par le robot d'alimentation et la fourniture d'une alerte à un utilisateur en réponse à la détection de la situation de conflit, dans lequel la situation de conflit comprend un ou plusieurs parmi :
• que la moyenne temporelle d'un nombre d'animaux « pouvant atteindre la nourriture (B1) » et « ne mangeant pas (A2) » tombe en dessous d'une valeur seuil,
• qu'une moyenne temporelle d'un nombre d'animaux qui « mangent (A1) » dépasse ou est inférieure à une valeur seuil.
• qu'une répartition des animaux positionnés à différentes parties de la table d'alimentation (31) s'écarte d'une répartition attendue de plus d'une certaine quantité.

9. Dispositif de commande (100) permettant de faire fonctionner un robot d'alimentation (1) au niveau d'une table d'alimentation (31) dans une zone d'élevage (30), le dispositif de commande (10) étant configuré pour :
- surveiller, sur une période de temps suivant la répartition de nourriture au niveau de la table d'alimentation, des données d'animal acquises par un système de localisation en temps réel, à l'aide d'étiquettes portées par les animaux (10) dans la zone d'élevage (30) et indiquant des positions respectives des animaux dans la zone d'élevage (30) par rapport à une table d'alimentation (31),
- déterminer, sur la base des données d'animal indiquant des positions respectives des animaux par rapport à la table d'alimentation, des statuts alimentaires d'une pluralité d'animaux individuels (10) dans la zone d'élevage, dans lequel le fait de déterminer (S2) des statuts alimentaires comprend le fait de déterminer un ou plusieurs parmi :
• si les animaux individuels (10) mangent (A1) ou ne mangent pas (A2),
• si les animaux individuels (10) peuvent atteindre la table d'alimentation (B1) ou ne peuvent pas atteindre la table d'alimentation (B2) et
• si les animaux individuels (10) se trouvent dans une zone d'alimentation (C1) ou en dehors de la zone d'alimentation (C2), dans lequel la zone d'alimentation (34) est une zone prédéfinie dans laquelle un animal qui mange (A1) ou tente de manger est censé résider, et
- commander le fonctionnement du robot d'alimentation autonome (1) sur la base des statuts alimentaires déterminés de la pluralité d'animaux individuels, dans lequel la commande (S5) comprend le déclenchement (S5d) du démarrage et/ou de l'arrêt du fonctionnement du robot d'alimentation, et/ou le réglage (S5e) d'une trajectoire, d'une vitesse et/ou d'un mode de fonctionnement du robot d'alimentation.

10. Dispositif de commande (100) selon la revendication 9, dans lequel le dispositif de commande (10) est configuré pour réaliser le procédé selon l'une quelconque des revendications 2 à 8.
